Europäisches Patentamt

European Patent Office

Office européen des brevets

(19)

(11) **EP 1 511 033 A1**

(12) **EUROPEAN PATENT APPLICATION**
published in accordance with Art. 158(3) EPC

(43) Date of publication:
**02.03.2005 Bulletin 2005/09**

(51) Int Cl.$^7$: **G11B 20/14**, G11B 20/10,
G11B 20/18

(21) Application number: **04734742.2**

(22) Date of filing: **25.05.2004**

(86) International application number:
**PCT/JP2004/007451**

(87) International publication number:
**WO 2004/105025 (02.12.2004 Gazette 2004/49)**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **26.05.2003 JP 2003148122**

(71) Applicant: **Sony Corporation
Tokyo 141-0001 (JP)**

(72) Inventors:
• **KAJIWARA, Yoshiyuki, SONY CORPORATION
Shinagawa-ku, Tokyo 141-0001 (JP)**
• **INO, Hiroyuki, SONY CORPORATION
Shinagawa-ku, Tokyo 141-0001 (JP)**

(74) Representative: **Smith, Samuel Leonard
J.A. Kemp & Co.,
14 South Square,
Gray's Inn
London WC1R 5JJ (GB)**

(54) **SIGNAL PROCESSING DEVICE AND SIGNAL PROCESSING METHOD**

(57)     The present invention is directed to a signal processing apparatus adapted for correcting non-linear distortion of a reproduction signal, which comprises a secondary adaptive equalizing filter (16) connected in parallel with a primary adaptive equalizing filter (15) in order to correct non-linear distortion that an analog equalized signal $x_0(k)$ has. Filter outputs of the primary adaptive equalizing filter (15) and the secondary adaptive equalizing filter (16) are added at an adder (17). The added output thus obtained is delivered to a phase interpolation filter (18) as an equalized output y(k). The phase interpolation filter (18) performs interpolation of phase on the basis of a filter output of the primary adaptive equalizing filter (15) and a filter output of the secondary adaptive equalizing filter (16). A filter output of the phase interpolation filter (18) is delivered to an ITR-PLL circuit (19).

FIG.3

EP 1 511 033 A1

**Description**

Technical Field

The present invention relates to a signal processing apparatus and a signal processing method, and more particularly to a signal processing apparatus supplied with a reproduction signal having non-linear distortion and a signal processing method therefor.

This Application claims priority of Japanese Patent Application No. 2003-148122, filed on May 26, 2003, the entirety of which is incorporated by reference herein.

Background Art

Storage apparatuses employing recording system such as magnetic recording or optical recording, etc. comprises, as reproduction channel for signal thereof, an analog signal processing block constituted by analog circuits, and a digital signal processing block constituted by digital circuits. These signal processing blocks are conventionally designed on the basis of linear signal processing theory constructed assuming that input signal is linear. In general, there is no possibility that the analog circuit may perform completely ideal linear response. However, since non-linearity in that response is sufficiently small in ordinary cases, an analog signal can be approximately regarded as a linear signal. As a result, signal processing apparatuses based on the linear theory sufficiently exhibited its effect.

In recent years, storage technology has been developed, and non-linearity so large as it cannot be neglected has appeared in a reproduction signal according as the recording density thereof is improved. Thus, its non-linearity leads to deterioration of Phase Locked Loop (PLL) performance, deterioration of convergence of adaptive equalizing filter, and/or deterioration of error rate at the time of detection of data, etc.

Representative non-linearities which constitute the causes of these non-linearities of reproduction signal are non-linearity resulting from signal detector and non-linearity resulting from recording medium. As representative example of non-linearity resulting from signal detector, there are mentioned non-linear response of magnetic field voltage converting characteristic of MR (Magneto Resistive) head used as reproduction head for magnetic recording, and base line shift, etc. Moreover, there is also non-linear response that photo-detector used in optical recording has. Although corresponding non-linearity is not non-linearity resulting from detector, it is well known that reproduction signal causes non-linear bit shift in writing high density data with respect to magnetic recording medium.

As an example of non-linearity resulting from recording medium, there is asymmetry in upper and lower directions of reproduction signal conspicuously appearing at phase-change disc. As representative examples, there are mentioned phenomenon of asymmetry in upper and lower directions of signal which are caused by Non Linear Inter-Symbol Interference (NLISI) in the state where, at both magnetic recording medium and optical recording medium, the recording density thereof is high and/or non-linearity of reflection factor of medium in the optical recording, etc.

Further, in recent years, non-linear distortion of a signal generated as the result of realization of high density recording with respect to medium which is tried for aiming at further improving recording capacity and non-linear distortion of a signal generated as the result of the fact that detector which has high performance, but has non-linear response is used leads to large cause or factor which constitutes obstacle to further improvement in performance of the entirety of the apparatus.

There are mentioned several bad influences that such non-linear distortion brings on conventional signal processing apparatus (signal processors). First, primary adaptive equalizing filter using LeastMean Square (LMS) algorithm, etc. mounted (used) in general digital signal processing apparatus is taken as an example. In such primary adaptive equalizing filter, error signal between detection signal which is target value in accordance with a predetermined equalization system and an actually detected signal is first detected with respect to an input waveform having no non-linear distortion. Further, it is guaranteed as principle that convergence into such tap coefficients to minimize square of the error signal is performed.

Meanwhile, it is impossible to theoretically correct non-linear distortion represented by asymmetry in upper and lower directions (asymmetry). However, the linear adaptive equalizing filter serves to search such a tap to minimize square error which is obtained only by detection from the nature of the algorithm thereof. For this reason, input waveform having asymmetry has the possibility that it may converges into a value apart from ideal tap coefficients in which linear signal should be primarily converged.

This indicates that in the case where a signal inputted to the primary adaptive equalizing filter which aims at equalizing a linear signal has non-linear distortion, there may result unexpected new equalization error resulting from conformity with adaptive equalization algorithm which does not primarily intend to correct non-linear equalizing error. For example, let consider the case where reproduction signal has DC component. The primary adaptive equalizing filter which aims at equalizing a linear signal cannot primarily correct the reproduction signal having such DC component. However, in practice, in the primary adaptive equalizing filter, low frequency component of signal is sacrificed with a view to attempting to minimize error rate at detection point to decrease DC component. Thus, variance value of signal error at detection point is decreased, but there is the possibility that error rate which is one of most important factors in storage products may be deteriorated.

Moreover, non-linear distortion of input signal exerts bad influence on phase error calculation of Phase Locked Loop (PLL). This is based on the reason described below. Namely, ordinary phase error calculation is performed on the premise of a signal symmetric in upper and lower directions. For this reason, in the case where phase error of a signal asymmetric in upper and lower directions is calculated, its calculation accuracy is determined. Further, error rate of detection value, which has been bit-by-bit detected, used for phase error calculation is deteriorated. Deterioration of the calculation accuracy and/or deterioration of error rate constitute cause. Resultantly, phase synchronization performance of PLL would be deteriorated to much degree.

As the result of the fact that a signal having non-linear distortion is inputted to the signal processing apparatus in this way, PLL performance is deteriorated. Followed by this, bit-by-bit detection accuracy is deteriorated. As a result, convergence of the primary adaptive equalizing filter is deteriorated. Further, there is the problem that deterioration of error rate of reproduction signal leads to deterioration of performance of the entirety of the apparatus.

Meanwhile, as a method for performing non-linear equalization of a signal having non-linear distortion, techniques in which polynomial filter is mounted (used) as adaptive equalizing filter are proposed in various signal processing fields. In general, the polynomial filter is called Volterra filter, and its application is versatile. In the Volterra filter, tap coefficients thereof can be optimized in accordance with adaptive equalization theory such as LMS or RLS, etc. In the literature "Adaptive Polynomial Filters, V. John Mathews, IEEE SP Magazine, July, 1991 pp 10-26", the theory of the adaptive equalizing Volterra filter is described in detail.

As an example of a signal processing apparatus supplied with a signal having non-linearity represented by asymmetry, there is mentioned a hard disc drive using MR head. However, there is no possibility that the Volterra filter is used in conventional general hard disc drive. In the general hard disc drive using MR head, it is sufficient to mount a circuit for correcting asymmetry in analog or digital circuit to determine optimum parameters at initialization at the time of shipping (delivery) to store those parameters into setting register. This is because, in the general hard disc drive, the medium and the head are fixed so that there is no possibility that movement (fluctuation) of mechanical relative position therebetween may take place. In addition, this is also because aging deterioration at the time of use such as abrasion of both members hardly takes place since the magnetic head is of the floating type by air-bearing.

On the contrary, in digital data magnetic recording/reproducing apparatus using tape medium, and/or optical apparatuses of the removable type, etc., change of mechanical relative position between the head and the medium takes place at all times by exchange of medium. Further, in the case where consideration is made in the state including also hard disc drive of the removable type, there are also unevenness (variations) in magneto-optical characteristics of respective media and mechanical accuracies of individual cartridges. From such changes of relative position and/or variation thereof, etc., non-linearity taking place in reproduction signal between the same drive units and other drive units easily changes. In addition, e.g., in digital data magnetic recording/reproducing apparatus for tape medium, since the head and the medium are in contact with each other, aging deterioration based on abrasion takes place at both head and medium. Such aging deterioration constitutes causes (factors) which momentarily changes non-linearity of the head itself.

From the above points, in the removable type digital recording/reproducing apparatus, or digital recording/reproducing apparatus in which the medium and the head are in contact with each other, it is necessary to realize improvement in error rate by correction of non-linearity. However, it is impossible to cope with such improvement in error rate only by initialization of drive unit, and it is therefore desirable to mount (use) adaptive equalizing filter automatically following with respect to non-linear signal changing at the time of exchange of cartridge and with lapse of time. Thus, it becomes possible to sufficiently cope with also change of non-linear response of reproduction head, etc. by exchange and/or aging deterioration of the medium to maintain satisfactory error rate.

In view of the above, there has been conventionally proposed an approach to process, by signal processing apparatus of the configuration using adaptive equalizer, the above-mentioned reproduction signal having non-linear distortion, e.g., reproduction signal inputted from magnetic reproduction head for HDD and/or photo-detector for optical disc drive, etc.

For example, in the Japanese Patent Application Laid Open No. 1998-261205 publication, there are disclosed a magnetic recording/reproducing apparatus and a reproduction compensation apparatus caused to be of the configuration comprising, as reproduction system for data into which non-linear factor of the magnetic recording/reproducing apparatus is mixed, a group of parallel equalizers composed of plural equalizers having different equalizing characteristics, and a circuit for judging an equalizer indicating minimum error equalization.

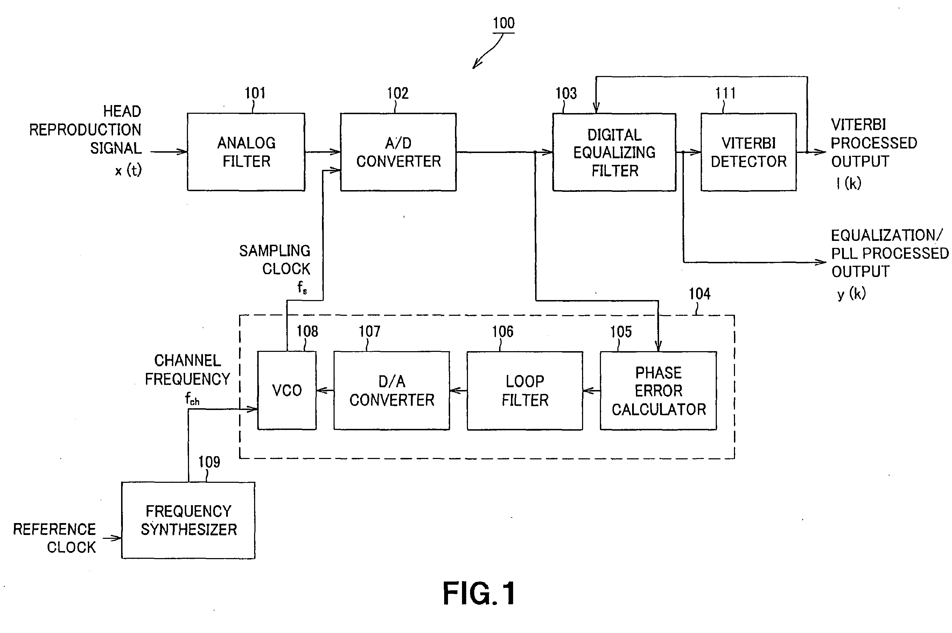

Moreover, in order to conventionally equalize a reproduction signal having no non-linear distortion by adaptive equalizer, a signal processing apparatus 100 of the configuration as shown in FIG. 1 is generally used.

The signal processing apparatus 100 shown in FIG. 1 is an apparatus example in which digital adaptive equalizing filter is mounted (connected) at the succeeding stage of PLL for analog Voltage Controlled Oscillator (VCO) base magnetic recording which is generally used. A head reproduction signal x(t) having no non-linear distortion is equalized by an analog filter 101, and is converted into a digital signal by an A/D converter 102. This digital signal is delivered to a digital adaptive equalizing filter 103 and a phase error calculator 105.

The digital adaptive equalizing filter 103 determines residual equalizing error between the digital signal and an ideal equalized signal by using detection data obtained from a Viterbi detector 111 to finally correct adaptive equalizing filter tap coefficients by using this residual equalizing error. However, a signal to which only equalization by analog filter has been performed is delivered to a PLL circuit 104, wherein a linearly adaptively equalized signal is not delivered thereto.

The PLL circuit 104 is composed of a phase error calculator 105, a loop filter 106, a D/A converter 107, and a Voltage Controlled Oscillator (VCO) 108. The phase error calculator 105 calculates a phase error of a signal which has been analog-equalized by the analog filter 101 and has been then digitized by the D/A converter 107. The loop filter 106 outputs proportional term, differential term and integral term thereof by using suitable filter coefficients with respect to the phase error. The D/A converter 107 converts integral value of the phase error into an analog signal.

The VCO 108 generates sampling clock fs for correcting phase from phase error signal converted into analog signal by using channel frequency fch from a frequency synthesizer 109 to deliver the sampling clock fs to the A/D converter 102. Further, the A/D converter 102 adjusts phase of a filter output signal of the analog filter 101 by using the sampling clock fs.

In general signal processing apparatuses, there are many cases where adaptive equalizing filter is mounted (connected) at the succeeding stage of PLL device as in the case of the above-mentioned example. However, ideally, it is desirable that adaptive equalizing filter is mounted (connected) at the preceding stage of PLL to perform, as PLL operation, phase synchronization by PLL by using data having less distortion which has been compared with equalized ideal waveform. This is because in the case where a signal having large equalizing error is inputted in a signal processing system where SNR of a signal before equalization is low followed by improvement in recording density, error rate of bit-by-bit detection is further deteriorated so that the phase error calculator would perform erroneous operation.

On the contrary, as a configuration example capable of implementing adaptive equalizing filter at the preceding stage of PLL as digital PLL, phase locked loop for processing digital signal of the Interpolated Timing Recovery (ITR) system is put into practical use. In the literature " A MMSE Interpolated Timing Recovery Scheme for The Magnetic Recording Channel, Zi-Ning Wu, John M. Cioffi, er al., Communications, 1997. ICC '97 Montreal, Towards the Knowledge Millennium. 1997 IEEE International Conference on, Volume: 3, 1997 pp 1625-1629 vol. 3", and the literature "Interpolated Timing Recovery for Hard Disk Drive Read Channels, MarkSpurbeck, Richard T. Behrens, Communications, 1997, ICC '97 Montreal, Towards the Knowledge Millennium. 1997 IEEE International Conference on, Volume : 3, 1997 pp 1618-1624 vol. 3", a technique in which digital PLL using ITR system is applied to the field of data reproduction for magnetic recording is described. This system also facilitates realization of the configuration for optical recording/reproduction signal.

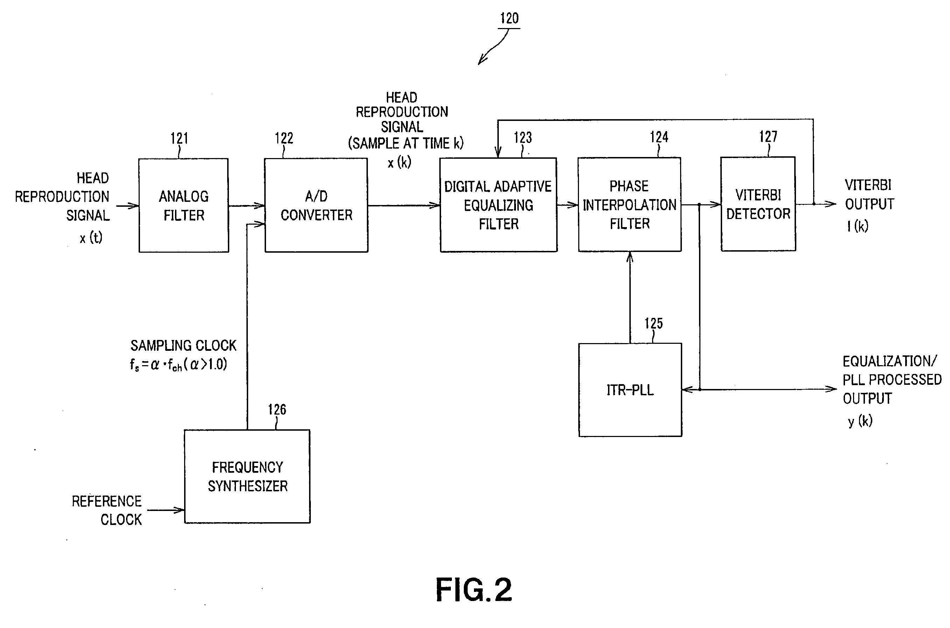

A signal processing apparatus 120 of the representative configuration in which digital adaptive equalizing filter is provided at the preceding stage of an ITR-PLL 125 for magnetic recording/reproduction signal is shown in FIG. 2. A head reproduction signal x(t) having no non-linearity is inputted to an analog filter 121, at which anti-aliasing thereof is performed. The head reproduction signal which has been caused to undergo anti-aliasing is inputted to an A/D converter 122.

The A/D converter 122 is supplied, from a frequency synthesizer 126, with sampling clock of a frequency fs = $\alpha \cdot$fch ($\alpha$ > 1.0) higher to a little degree with respect to channel frequency. Further, the A/D converter 122 performs sampling of the head reproduction signal at the frequency fs to generate a head reproduction signal x(k) sampled at time k to input the head reproduction signal x(t) thus generated to a digital adaptive equalizing filter 123.

The digital adaptive equalizing filter 123 equalizes the head reproduction signal x(k) by a desired equalization system, e.g., partial response classes I, II, IV and extended partial responses thereof, etc. In the digital PLL of the ITR system, excess signal taking place by difference between channel frequency and sampling frequency is produced in principle. This signal is regarded as the point where mismatching of signal takes place, i.e., the point where jump of phase takes place. At later time, such signal is predicted and is thinned at data detector, thereby making it possible to obtain only necessary signal.

Phase synchronization of a signal which has been equalized by a desired equalization system at a digital adaptive equalizing filter 123 and is taken by implementing a desired phase shift at a phase interpolation filter 124. For interpolation of sampling data at a digital PLL 125 using ITR system, various methods are proposed.

For example, in the case where phase is interpolated by FIR filter, there are used, as tap coefficients thereof, Sinc function, Sinc function multiplied by various window functions used in digital signal processing, and FIR filter tap coefficients obtained by inverse Fourier-transforming a filter having a predetermined frequency characteristic, etc. In addition, there is generally used a method of approximating between two points or plural points which have been sampled by polynomial formula to perform interpolation, etc.

The configuration in which digital filter is provided at the preceding stage of the PLL for analog VCO base magnetic recording shown in FIG. 1 and the configuration in which adaptive equalizing filter is provided at the preceding stage of the ITR system PLL shown in FIG. 2 is different in dependency upon whether or not adaptive equalizing filter can be mounted (connected) at the preceding stage of the PLL. Thus, at the configuration shown in FIG. 2, improvement in PLL performance is expected so that this configuration is employed in hard disc products, etc.

As described above, non-linear distortion of an input signal exerts bad influence on the equalization characteristic of equalized signal and PLL characteristic thereof, etc. thus to deteriorate error rate characteristic of reproduction signal. Particularly, in the case where influence on the PLL characteristic is taken into consideration, calculation error of PLL phase error deteriorates phase synchronization performance.

Especially, phase synchronization function by PLL is broken or failed in dependency upon mechanical relative position error at the time of chucking and/or unevenness of the medium performance in the system where Signal to Noise Ratio (SNR) of reproduction signal obtained from magnetic reproduction head or photo-detector, etc. is low and/or data reproducing unit in which the medium is of the detachable type, and the reproduction condition of the reproducing unit. As a result, there is the possibility that the signal reproducing unit system may be placed in unreproducible state.

Disclosure of the Invention

An object of the present invention is to provide a novel signal processing apparatus and a novel signal processing method which can solve problems that prior arts have.

Another object of the present invention is to provide a signal processing apparatus and a signal processing method which are adapted for correcting non-linear distortion of reproduction signal to resultantly improve PLL performance to improve, followed by such improvement, equalizing characteristic to finally improve error rate of the entirety of the signal processing system.

The signal processing apparatus according to the present invention proposed in order to attain objects as described above comprises: analog filter means for performing band limitation of a reproduction signal having a non-linear distortion and for performing analog equalization thereof; first adaptive equalizing filter means for equalizing a linear signal of a filter output of the analog filter means; and second adaptive equalizing filter means connected in parallel with the first adaptive equalizing filter means in order to correct non-linear distortion that the filter output of the analog filter means has.

The signal processing apparatus according to the present invention further comprises: phase interpolation means for performing interpolation of phase on the basis of a filter output of the first adaptive equalizing filter means and a filter output of the second adaptive equalizing filter means; and phase locked loop means for synchronizing phase of the phase interpolation means on the basis of an interpolated output fed back from the phase interpolation means.

In addition, the signal processing method according to the present invention comprises: an analog filter step for performing band limitation of a reproduction signal having non-linear distortion and for performing analog equalization thereof; a first adaptive equalizing filter step for equalizing a linear signal of a filter output of the analog filter step; and a second adaptive equalizing filter step executed in parallel to the first adaptive equalizing filter step in order to correct non-linear distortion that the filter output of the analog filter step has.

The signal processing method according to the present invention may further comprise a phase interpolation step for performing interpolation of phase on the basis of a filter output of the first adaptive equalizing filter step and a filter output of the second adaptive equalizing filter step; and a phase locked loop step for synchronizing phase of the phase interpolation step on the basis of an interpolated output fed back from the phase interpolation step.

Still further objects of the present invention and practical merits obtained by the present invention will become more appararent from the description of the embodiments which will be given below with reference to the attached drawings.

Brief Description of the Drawings

FIG. 1 is a block diagram of an apparatus in which digital filter is mounted (connected) at the preceding stage of PLL for analog VCO base magnetic recording.
FIG. 2 is a block diagram of a representative apparatus of ITR-PLL for magnetic recording/reproduction signal.
FIG. 3 is a block diagram showing a reproduction signal processing apparatus for magnetic recording according to the present invention.
FIG. 4 is a characteristic diagram showing arctan type MR head non-linear response model.
FIG. 5 is a characteristic diagram showing asymmetry model of MR head reproduction waveform.
FIG. 6 is a characteristic diagram showing the relationship between bias point parameter and asymmetry ratio.

FIG. 7 is a view showing the configuration of non-linear MR head reproduction waveform generation block of the arctan type.

FIG. 8 is an eye pattern diagram under the condition (1) (additive noise does not exist).

FIG. 9 is an eye pattern diagram under the condition (2) (additive noise does not exist).

FIG. 10 is a comparison diagram of adaptively equalized SDNR versus input SNR.

FIG. 11 is a comparison diagram of phase error variance versus input SNR.

FIG. 12 is a comparison diagram of error rate versus input SNR.

FIG. 13 is a block diagram showing another example of a reproduction signal processing apparatus according to the present invention.

FIG. 14 is an error rate characteristic diagram at the time of radial skew change of optical disc.

Best Mode for Carrying Out the Invention

Several embodiments of the present invention will now be described with reference to the attached drawings.

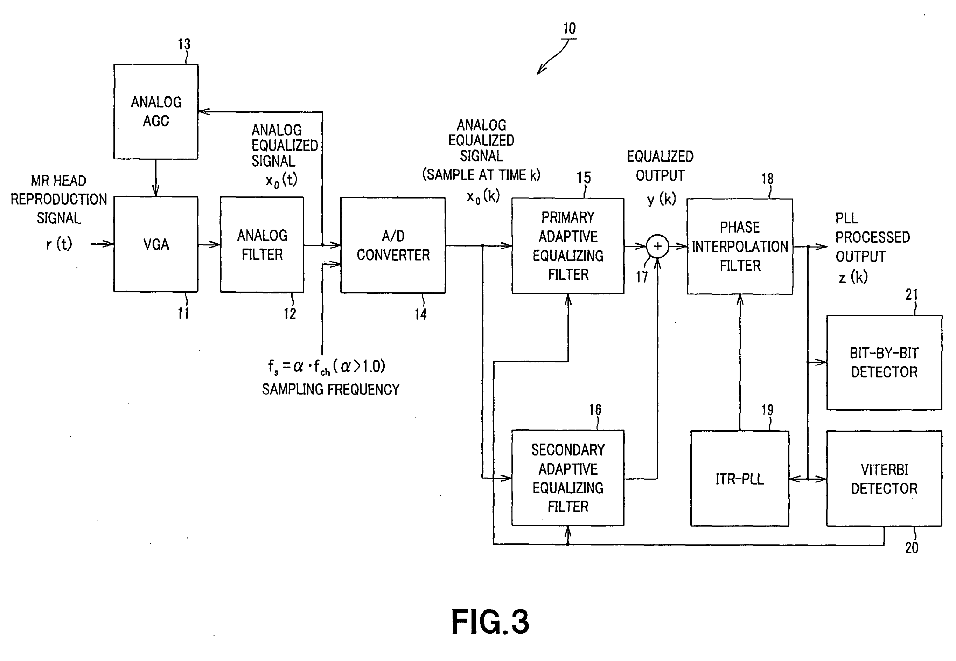

Initially, the first embodiment will be explained. This embodiment is directed to a reproduction signal processing apparatus 10 for magnetic recording which is adapted for processing MR head reproduction signal from hard disc drive using Magneto Resistive (MR) head. As shown in FIG. 3, the reproduction processing apparatus 10 for magnetic recording is supplied with a reproduction signal r(t) of the MR head at time t. At the MR head, the magnetic field voltage conversion characteristic has non-linear response. For this reason, the reproduction signal r(t) of the MR head has non-linear distortion because of non-linear response that the MR head has.

The entire configuration of the reproduction signal processing apparatus 10 for magnetic recording will be explained. The reproduction signal r(t) is passed through a Variable Gain Amplifier (VGA) 11, and is delivered to an anti-aliasing filter 12.

The anti-aliasing filter 12 implements band limitation and analog equalization to the reproduction signal which has been passed through the VGA 11. An analog filter output of the analog anti-aliasing filter 12 is delivered to an analog Auto Gain Control (AGC) circuit 13. The analog AGC circuit 13 determines peak value of output waveform amplitude of the analog anti-aliasing filter 12 to calculate level error as error between the peak value thus determined and ideal detection value. The level error is delivered to analog integration filter within the analog AGC circuit 13, at which its error quantity is integrated. The error quantity which has been integrated at the analog integration filter is fed back to the VGA 11. The VGA 11 adjusts level of amplitude of the reproduction signal r(t).

The analog filter output of the analog anti-aliasing filter 12, i.e., analog equalized signal $x_0(t)$ which is equalized signal is also delivered to an A/D converter 14. The A/D converter 14 performs sampling of the analog equalized signal $x_0(t)$ at a predetermined sampling frequency. A signal which has been undergone sampling at time k by the A/D converter 14 is assumed to be $x_0(k)$. The analog equalized signal $x_0(k)$ which has been undergo sampling at the time k is delivered to a primary adaptive equalizing filter 15 and a secondary adaptive equalizing filter 16.

The primary adaptive equalizing filter 15 equalizes a linear signal of the analog equalized signal $x_0(k)$. Least Mean Square (LMS) algorithm, etc. is used. The primary adaptive equalizing filter 15 detects an error signal between target detection value in accordance with a predetermined equalization system and actually detected signal with respect to an input waveform having no non-linear distortion. Further, it is guaranteed as principle that convergence into such tap coefficients to minimize square of error signal is made.

The secondary adaptive equalizing filter 16 is connected in parallel with the primary adaptive equalizing filter 15 for the purpose of correcting non-linear distortion that the analog equalized signal $x_0(k)$ has. The secondary adaptive equalizing filter 16 is a filter in which polynomial filter is applied, and is called Volterra filter. The Volterra filter can optimize tap coefficients thereof in accordance with the adaptive equalization theory such as LMS, etc.

Filter outputs of the primary adaptive equalizing filter 15 and the secondary adaptive equalizing filter 16 are added at an adder 17, and the added output is delivered to a phase interpolation filter 18 as equalized output y(k). The phase interpolation filter 18 performs interpolation of phase on the basis of filter output which is sum of filter output of the primary adaptive equalizing filter 15 and filter output of the secondary adaptive equalizing filter 16.

A filter output of the phase interpolation filter 18 is delivered to an ITR-PLL circuit 19. Further, PLL processed output z(k) from the phase interpolation filter 18 is guided (delivered) to the external, and is also delivered to a Viterbi detector 20 and a bit-by-bit detector 21. A detection result of the Viterbi detector 20 is fed back to the primary adaptive equalizing filter 15 and the secondary adaptive equalizing filter 16.

Then, the operation of the reproduction signal processing apparatus 10 for magnetic recording will be explained. The VGA 11 adjusts level of the reproduction signal r(t) in response to feedback of integral value of level error between peak value of waveform amplitude of the analog filter output that the analog AGC circuit 13 has determined and ideal detection value on the basis of filter output of the analog anti-aliazing filter 12.

As the analog anti-aliasing filter 12, there is used a filter in which 7 pole 2 zero filter is parameter-optimized for PR4 equalization. The analog AGC circuit 13 determines peak value of the waveform amplitude thereof from analog filter output of the analog anti-aliasing filter 12 to calculate error (level error) between the peak value thus determined and ideal detection value. Thereafter, its error quantity is integrated at analog integration filter. The error quantity thus integrated is fed back to the VGA 11 to thereby adjust the amplitude so that the A/D converter 14 has an input of a suitable level.

At the A/D converter 14, the sampling frequency is caused to be expressed as fs=$\alpha$·fch ($\alpha$ = 16/15). The A/D converter 14 performs sampling of the analog equalized signal $x_0(t)$ at a clock having sampling frequency fs = $\alpha$·fch ($\alpha$ = 16/15).

The primary adaptive equalizing filter 15 and the secondary adaptive equalizing filter 16 can be represented as respective terms of the following formula (1).

$$y(k) = \sum_{i=0}^{M_1-1} h^{(1)}(k,i) \cdot x(k-i) + \sum_{i_1=0}^{M_2-1} \sum_{i_2=0}^{M_2-1} h^{(2)}(k,i_1,i_2) \cdot x(k-i_1) \cdot x(k-i_2)$$

$$\cdots \quad (1)$$

The right side first term of the formula (1) indicates the primary adaptive equalizing filter and the right side second term indicates the secondary adaptive equalizing filter. x(k) is an input signal sampled at time k, and y(k) is sum of outputs of the primary and secondary adaptive equalizing filters. M1 is tap length of the primary adaptive equalizing filter 15 and M2 is tap length of the secondary adaptive equalizing filter 16, wherein respective filters have M2 × M2 number of secondary taps in practice. h(1) (k, i) is updating tap coefficients at time k of the primary adaptive equalizing filter 15, and updating relation by the LMS algorithm thereof is represented by the formula (2) expressed below

$$h^{(1)}(k+1,i) = h^{(1)}(k,i) + \mu^{(1)} \cdot e(k) \cdot x(k-i) \qquad (2)$$

In this case, when desired filter output at time k is assumed to be d(k), an error signal between the desired output and filter output is represented by the formula (3) expressed below.

$$e(k) = d(k) - y(k) \qquad (3)$$

Moreover, $\mu$(1) is step size parameter of the primary adaptive equalizing filter 15. h(2) (k, i1, i2) is updating tap coefficients at time k of the secondary adaptive equalizing filter 16, and updating relation by LMS algorithm thereof is represented by the following formula (4).

$$h^{(2)}(k+1,i_1,i_2) = h^{(2)}(k,i_1,i_2) + \mu^{(2)} e(k) \cdot x(k-i_1) \cdot x(k-i_2) \qquad (4)$$

$\mu$(2) is step size parameter of the secondary adaptive equalizing filter 16. As tap length in the first embodiment, M1=12 is used at the primary adaptive equalizing filter 15 and M2=8 is used at the secondary adaptive equalizing filter 16.

At the phase interpolation filter 18, a desired phase shift is implemented so that phase synchronization is taken. For interpolation of sampling data at the digital PLL 19 using the ITR system, various methods are proposed.

Here, the tap length of the phase interpolation filter 18 is set to 10 taps. Moreover, as tap coefficients of the phase interpolation filter 18, there is used Sinc function having null points every channel period Tch on the time axis, and resolution of phase is set to (Tch/128).

It is to be noted that in the case where phase is interpolated by the FIR filter, there may be used, as tap coefficients thereof, Sinc function multiplied by various window functions used in digital signal processing, and/or FIR filter tap coefficients obtained by performing inverse Fourier transform of filter having a predetermined frequency characteristic, etc. in addition to the fact that Sinc function is used. In addition, there may be used a method of approximating between sampled two points or plural points by polynomial relation, etc.

The digital PLL of the ITR system is already known technology, and the configuration thereof is described in detail in the previously mentioned literature " A MMSE Interpolated Timing Recovery Scheme for The Magnetic Recording Channel, Zi-Ning Wu, John M. Cioffi, et al., Communications, 1997. ICC '97 Montreal, Towards the Knowledge Millennium, 1997 IEEE International Conference on, Volume:3, 1997 pp 1625-1629 vol. 3", and the literature "Interpolated Timing Recovery for Hard Disk Drive Read Channels, Mark Spurbeck, Richard T. Behrens, Communications, 1997. ICC '97 Montreal, Towards the Knowledge Millennium. 1997 IEEE International Conference on, Volume:3, 1997 pp 1618-1624 vol. 3".

The adaptive equalizing filter linearly interpolates detection point error thereof by the theory of Inverse ITR described in these literatures to thereby deliver an interpolated output thus obtained to adaptive equalizing filter asynchronous to channel frequency of the preceding stage. The above-described primary and secondary adaptive equalizing filters substitute adaptive equalizing filter unit of the conventional ITR system PLL device and operate as primary and secondary adaptive equalizing filters which are asynchronous to channel frequency.

The Viterbi detector 20 is, e.g., Viterbi detector for PR4, and serves to detect error rate of adaptively equalized PLL output at time k. The bit-by-bit detector 21 also detects error rate of adaptively equalized PLL output at time k.

Then, the effect of the reproduction signal processing apparatus for magnetic recording will be explained. Here, MR head reproduction waveform having non-linear distortion which is inputted to the reproduction signal processing apparatus for magnetic recording is determined by modeling.

First, modeling method for MR head reproduction waveform having non-linear distortion is indicated. For simulation of reproduction waveform at magnetization reversal portion of data recording portion at the magnetically recorded medium, Lorentz waveform generally used in approximation of reproduction waveform of magnetic recording was used. The function form thereof is represented by the following formula (5).

$$f(t) = \frac{A}{1 + (2t/pw)^2} \qquad (5)$$

In the above formula, pw is half-value width of Lorentz waveform, and is a value obtained by dividing half-value width of isolated reproduction wave by period Tch of channel clock at a predetermined recording density. Such value is defined as Normalized Linear Density (NLD). In addition, A is peak amplitude of isolated reproduction wave in the magnetization reversal area represented by Lorentz waveform.

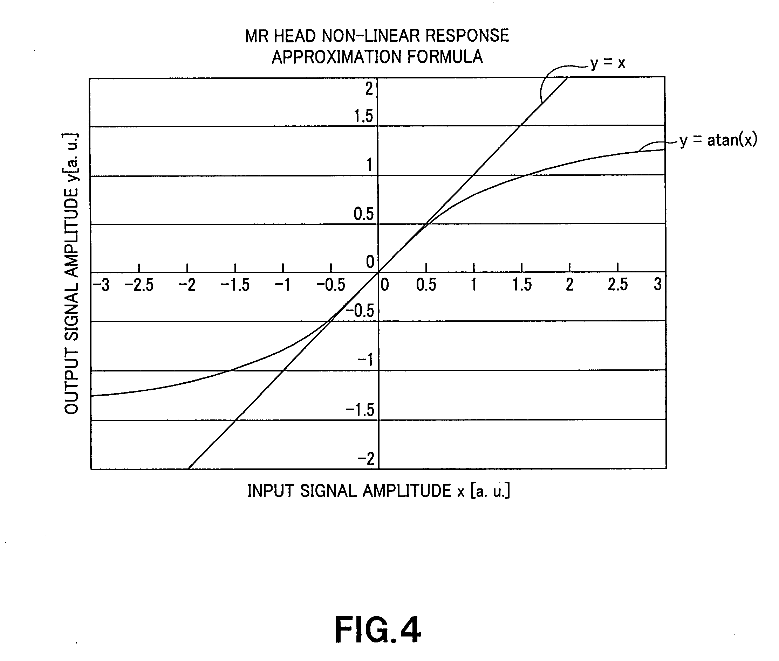

A linear magnetic field inputted to the MR reproduction head was generated by convolution of the Lorentz waveform represented by the formula (1) and reproduction code pattern. The non-linear response of the MR head means that output voltage non-linearly responds to the input magnetic field. In the first embodiment, it is assumed that response curve of the MR head is of arctan type. Its input/output characteristic is shown in FIG. 4. Here, for comparison, linear response y = x and MR head model non-linear response y = arctan (x) are indicated, and x-axis indicates an input signal to the MR head and y-axis indicates non-linear output. In the FIG. 4, it is assumed that the range where x is - 0.5 to 0.5 within the input range of y = arctan (x) is reasonable bias area. It is considered that when linear head reproduction waveform is assumed to be generated by superposition of Lorentz waveform of the maximum amplitude 1.0, its amplitude is approximately equal to about ±1.0 in terms of peah to peak even if influence of noise or intercode interference is taken into consideration. Accordingly, if the range of input waveform x (- 1. 0 ... 1.0) is mapped with respect to the linearly responsive input definition area (-0.5 ... 0.5) of the arctan type to double output y thus obtained, transformation of the head reproduction waveform by non-linear mapping of the arctan type is performed. In order to represent non-linearity, it is sufficient to change bias point. The transform formula of MR head non-linear type mapping of the arctan type used in the first embodiment is indicated by the following formula (6).

$$y = 2\left\{ \arctan\left(\frac{x}{2} + \Delta x\right) - \arctan\left(\Delta x\right) \right\} \qquad \cdots \qquad (6)$$

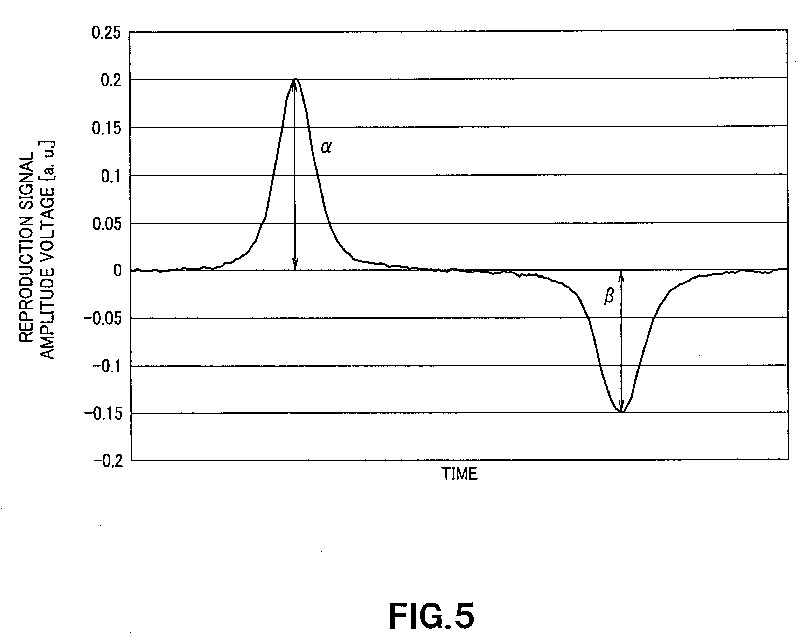

In the above formula, $\Delta x$ is parameter indicating bias point, wherein offset produced thereby is corrected by the second term. Then, parameter indicating non-linearity of reproduction signal is defined. Asymmetry model of MR head reproduction waveform is shown in FIG. 5. When crest (peak) value of positive reproduction voltage is $\alpha$ and crest (peak) value of negative reproduction waveform is $\beta$ in isolated reproduction waveform, asymmetry ratio R is defined by the following formula (7).

$$R \equiv \frac{\alpha - \beta}{\alpha + \beta} \tag{7}$$

In the above formula, $\alpha$ and $\beta$ are represented by the following formulas (8) and (9).

$$\alpha = |2\{\arctan(0.5 + \Delta x) - \arctan(\Delta x)\}| \tag{8}$$

$$\beta = |2\{\arctan(-0.5 + \Delta x) - \arctan(\Delta x)\}| \tag{9}$$

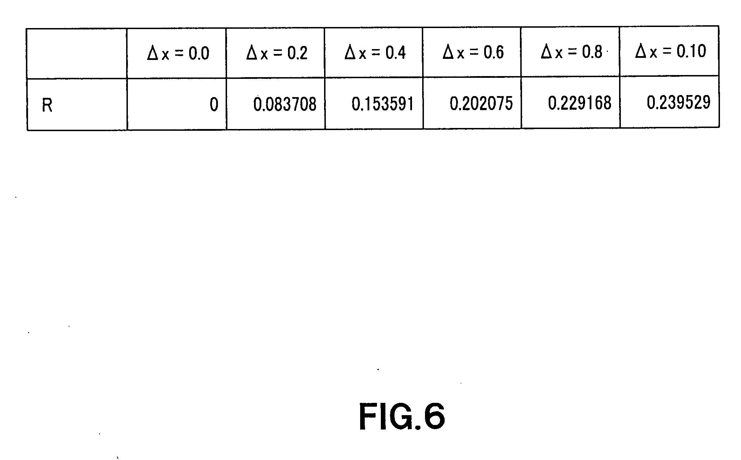

At this time, it is understood that bias point parameter $\Delta x$ and asymmetry ratio R have the relationship shown in FIG. 6. It is to be noted that normalized linear density is assumed to be 2.25 and respective magnetization reversal areas are sufficiently apart. The average amplitude Vave of isolated reproduction waveform having asymmetry obtained at this time is represented by the formula (10).

$$V_{ave} = \frac{\alpha + \beta}{2}$$

At time subsequent thereto, average crest (peak) value of isolated reproduction wave having asymmetry is caused to be 1.0 to thereby determine magnitude of Additive White Gaussian Noise (AWGN). Amplitude correction gain GMR after outputted from the MR head is set to a value such that average crest (peak) value is equal to 1.0, i.e., the formula (11) indicated below.

$$G_{MR} = \frac{2}{\alpha + \beta}$$

The amplitude correction gain GMR is used so that average amplitude of isolated reproduction waveform having asymmetry becomes equal to 1.0. Thus, signal amplitude of the isolated reproduction waveform can be regarded as 1.0. Magnitude of variance of AWGN is determined under such assumption so that suitable input SNR is provided to perform addition thereof.

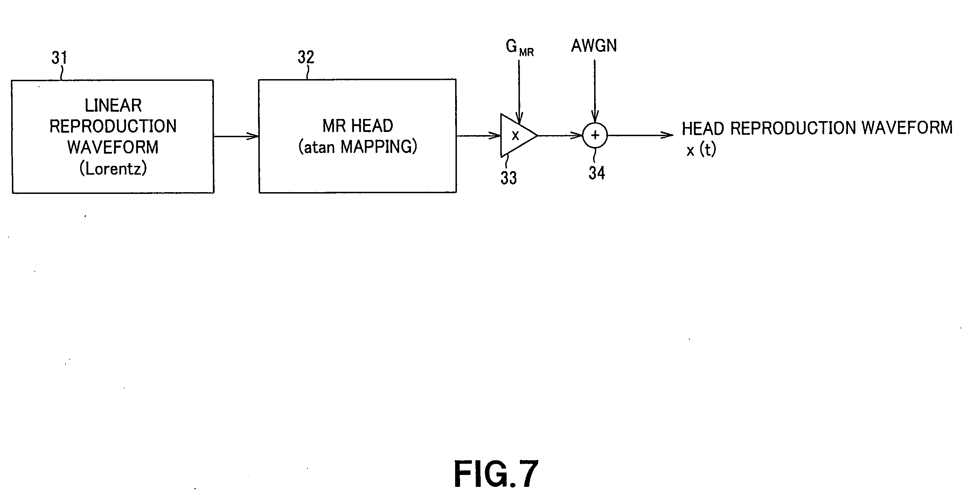

The configuration diagram of generation block of MR head reproduction waveform x(t) caused to have non-linearity of the arctan type which has been explained is shown in FIG. 7. In FIG. 7, a linear reproduction waveform generating unit 31 generates Lorentz waveform of the formula (5). A MR head non-linear mapping unit 32 performs transformation of head reproduction waveform by non-linear mapping of the arctan type in accordance with the transform relation of the formula (6).

Moreover, in FIG. 7, a multiplication unit 33 multiplies transform output of the MR head non-linear mapping unit 32 by amplitude correction gain GMR after outputted from MR head in accordance with the formula (11). Further, an adding unit 34 determines magnitudes of variance of AWGN so that multiplication output of the multiplication unit 33 is caused to have suitable input SNR to add them. Thus, it is possible to generate MR head reproduction waveform x(t).

The detail of the effect of the reproduction signal processing apparatus 10 for magnetic recording supplied with MR head reproduction waveform x(t) generated by the modeling method which has been explained will be explained below.

Assuming that the MR head reproduction waveform x(t) having asymmetry is reproduction waveform after undergone A/D conversion by the A/D converter 14 shown in FIG. 3, how its performance is improved by secondary adaptive equalizing filter 16 connected in parallel with the primary adaptive equalizing filter 15 is understood.

First, training of taps of the adaptive equalizing filter is performed by random data 100,000 points to utilize the converged tap coefficients as initial value of tap. Further, in the state where the adaptive equalization operation is stopped, SDNR (Signal and Distortion to Noise Ratio), error rate (bit-by-bit detector), error rate (Viterbi detector for PR4), and phase error variance after adaptive equalization by random data 1,000,000 is performed are calculated. Parameter is input SNR of head reproduction signal. Codes used are DC free codes of 8/9 rate, and adaptive equalization was performed with partial response class IV (PR4) being as target. With respect to an input signal, when crest (peak) value of isolated reproduction wave is 1.0, asymmetry ratio R was set to 0.22. In the following description, for the brevity, the case where the secondary adaptive equalizing filter operation is turned OFF is referred to as the condition (1), and the case where the secondary adaptive equalizing filter operation is turned ON is referred to as the condition (2). The input SNR was changed within the range from 21 to 27 dB.

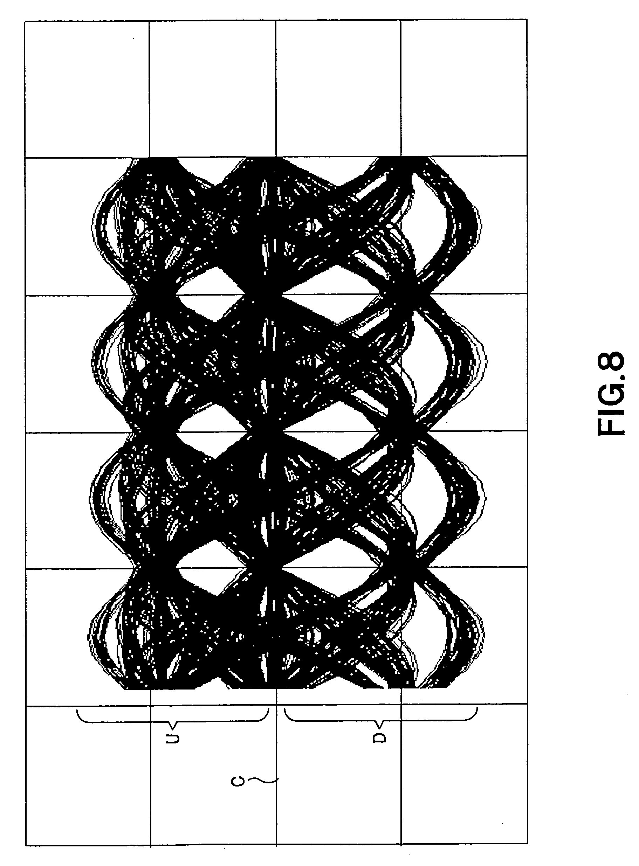

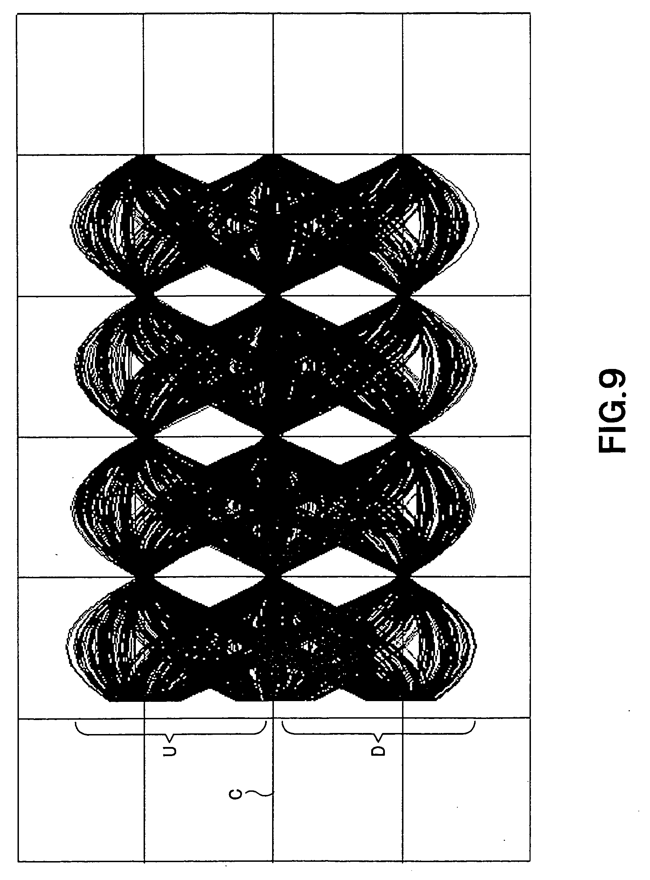

First, in order to examine non-linear distortion correction effect, especially effect of asymmetry correction of the secondary adaptive equalizing filter 16, adaptively equalized PR4 eye pattern in which noise is not added under the same condition is shown. Equalized eye pattern of the condition (1) is shown in FIG. 8, and equalized eye pattern of the condition (2) is shown in FIG. 9.

In the eye pattern of FIG. 8 in which the secondary adaptive equalizing filter 16 is not used, it is understood that sizes of the eye of the upper half (U) and lower half (D) of the center line C are asymmetric so that asymmetry given to head reproduction signal is not corrected. On the contrary, as shown in FIG. 9, in equalized signal by the secondary adaptive equalizing filter 16 used in the first embodiment, it is understood that sizes of eye of upper half (U) and lower half (D) of the center line C are symmetric so that asymmetry is completely corrected.

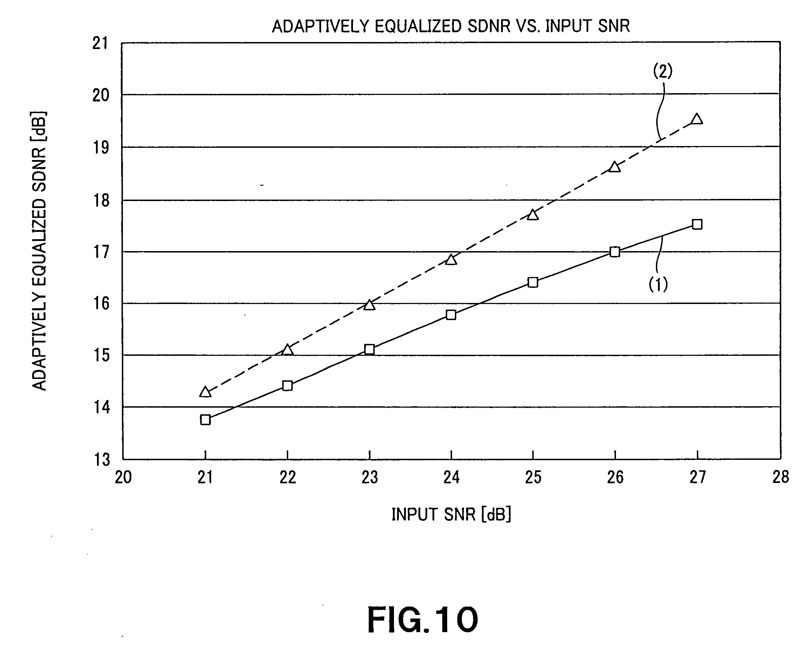

Then, the results of adaptively equalized SDNR with respect to the condition (1) and the condition (2) is shown in FIG. 10. Here, when square error variance between detection point and actual signal is σ2, and detection point level of PR4 is (-S, 0, S), SDNR is defined by the following formula (12). In this case, in the first embodiment, S is set to 1.0.

$$\text{SDNR} = 10 \log_{10} (S^2 / \sigma^2) \tag{12}$$

At this time, from FIG. 10, SDNR of the condition (2) is above SDNR of the condition (1) within all input SNR areas. Thus, it is understood that asymmetry is corrected by the effect of the secondary adaptive equalizing filter added by the first embodiment thus to reduce error variance at the detection point.

Then, the result obtained by calculating variance of phase error used in PLL is shown. As the calculation formula of phase error used in the first embodiment, there is used the formula (13) of timing gradient described in the literature "Roy D. Cideciyan, F. Dolivo, et at. A PRML System for Digital Magnetic Recording, IEEE Journal on Selected Areas in Communications, Volume: 10, NO. 1, January 1992. Pages(s) : 38-56".

$$\Delta\tau(k) = -\hat{z}(k)\cdot z(k\text{-}1) + \hat{z}(k\text{-}1)\cdot z(k) \tag{13}$$

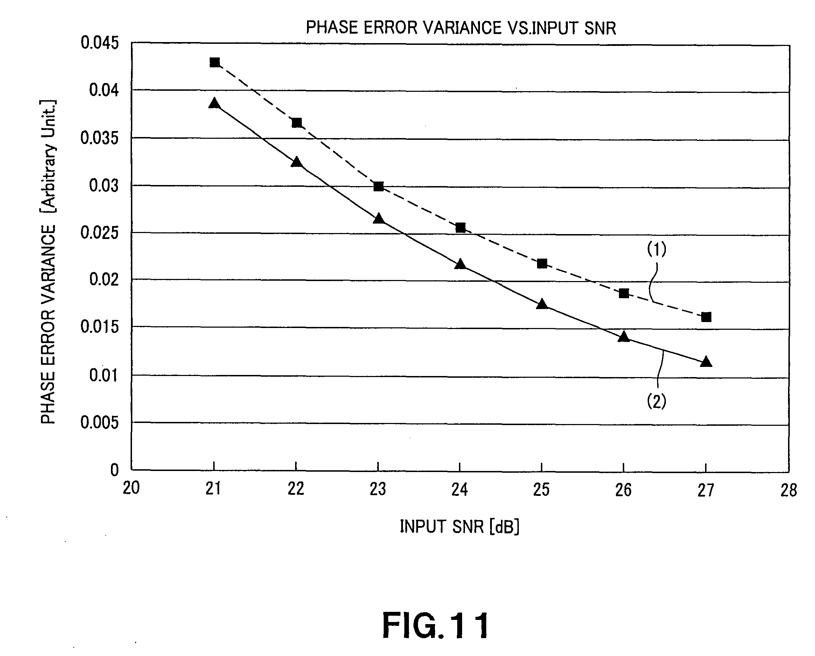

In the above formula, $\Delta\tau(k)$ is calculation quantity of phase error at time k, z(k) is adaptively equalized PLL output at time k, and z^(k) is bit-by-bit detection value (-1, 0, 1) of z(k) at time k. The result obtained by calculating phase error variance at random data of 1,000,000 points with respect to the condition (1) and the condition (2) at this time is shown in FIG. 9. At this time, unit system is an arbitrary unit system. From FIG. 11, it is understood that phase error valiance of the condition (2) is smaller than that of the condition (1) at all values of input SNR. This indicates that non-linear distortion is corrected as the result of the fact that the secondary adaptive equalizing filter 16 in the first embodiment is placed (provided) at the preceding stage of PLL so that non-linear distortion is corrected, and accuracy of signal used in phase error calculation is improved, whereby error rate of bit-by-bit detection value used in phase error calculation of PLL is improved so that variance of phase error is resultantly reduced and PLL performance is thus improved.

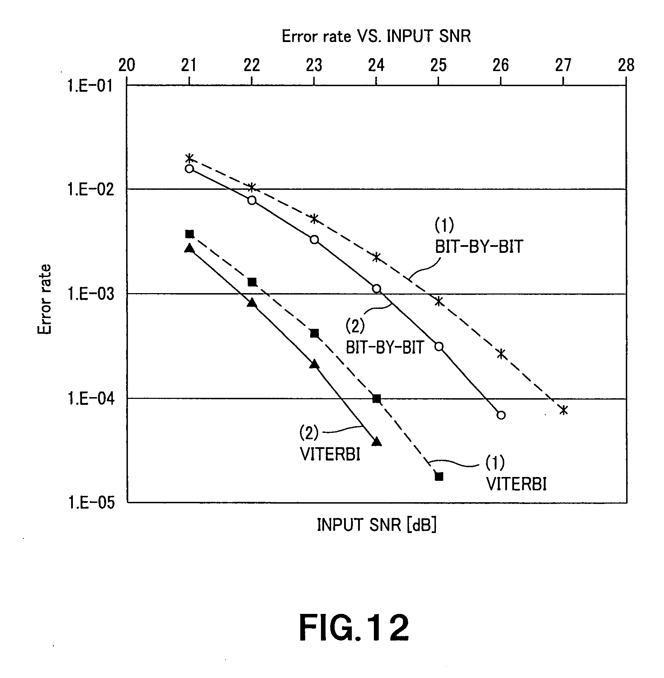

Finally, the result obtained by calculating adaptively equalized error rate by using the bit-by-bit detector 21 and the Viterbi detector 20 for PR4 equalization is shown in FIG. 12. It is understood that, also with respect to both error rate by the bit-by-bit detector 21 and error rate by the Viterbi detector 20, error rate performance of the condition (2) is improved to more degree as compared to that of the condition (1). Since improvement in error rate of bit-by-bit detection leads to improvement in performance of phase error calculation of PLL, this fact is not inconsistent with the fact that performance of PLL phase error variance is improved, which is shown in FIG. 11. In addition, it is also indicated that performance of detector at the succeeding stage of PLL is synthetically improved by correction of non-linear distortion and improvement in PLL performance. From this result, it was indicated that the secondary adaptive equalizing filter (16) is used in the first embodiment to thereby correct non-linear distortion such that asymmetry is representative to improve PLL performance to resultantly improve error rate performance of the data reproducing unit.

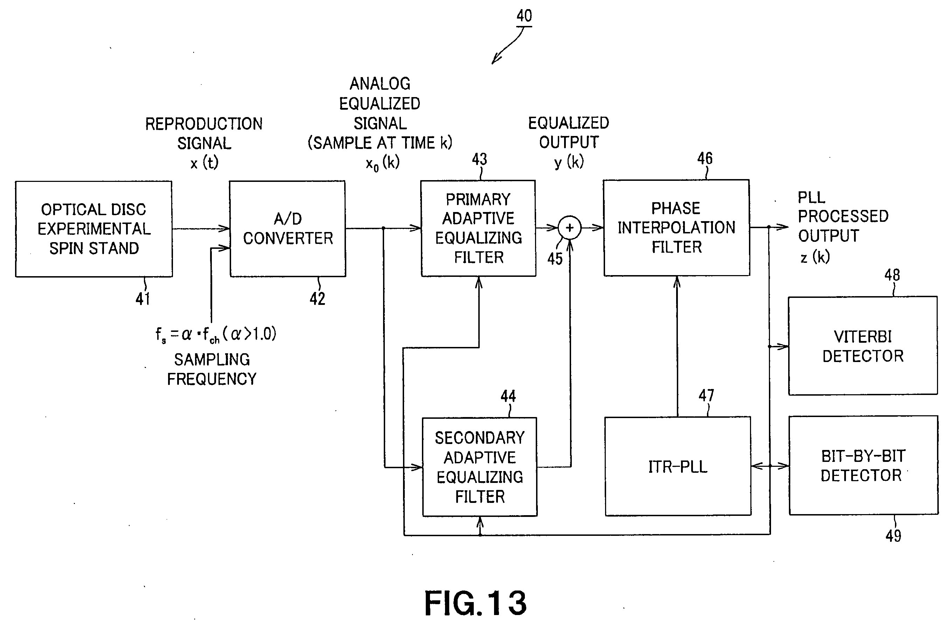

Then, the second embodiment will be explained. The second embodiment is directed to a reproduction signal processing apparatus 40 of FIG. 13 which is adapted for reproducing an optical disc of the phase change system having capacity corresponding to 27GB and diameter of 12 cm. In the optical disc of the phase change system, there are instances where asymmetry in upper and lower directions of reproduction signal conspicuously appears by the influence of radial skew. The reproduction signal processing apparatus of the second embodiment aims at removing asymmetry in upper and lower directions of reproduction signal taking place by radial skew of the optical disc of the phase change system.

The phase change system optical disc is reproduced by an optical disc reproducing unit 41 shown in FIG. 13. The optical disc reproducing unit 41 comprises a spin stand for experiment, and is adapted to have ability to generate radial skew. At the optical disc reproducing unit 41, anti-aliasing of reproduction signal is performed by analog filter. The reproduction signal thus obtained is delivered to an A/D converter 42 as reproduction signal x(t).

The A/D converter 42 samples analog equalized signal x(t) sampled by a predetermined sampling frequency. A signal thus sampled at time k is assumed to be $x_0(k)$. The equalized signal $x_0(k)$ sampled at the time k is delivered to a primary adaptive equalizing filter 43 and a secondary adaptive equalizing filter 44.

Since the primary and secondary adaptive equalizing filters 43 and 44, adder 45, phase interpolation filter 46, ITR-PLL circuit 47, Viterbi detector 48 and bit-by-bit detector 49 are the same as those of the first embodiment, their explanation will be omitted here. It is to be noted that the equalized signal $x_0(k)$ is adaptively equalized into PR (1 2 2 1). Further, error rate was measured by the Viterbi detector 48. In this example, measurement of error rate by the Viterbi detector 48 was performed by the primary and secondary adaptive equalizing filters 43 and 44 after tap coefficients have been sufficiently converged.

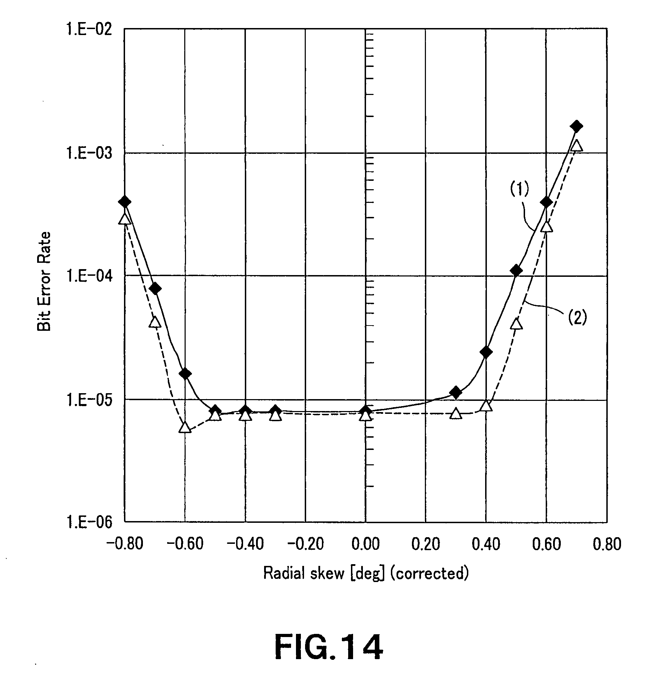

The error rate in the case where only the primary adaptive equalizing filter is used (1) and the error rate in the case where the primary and secondary adaptive equalizing filters are used in combination was compared. The comparison result is shown in FIG. 14. In accordance with FIG. 14, it is understood that satisfactory error rate is obtained in the example (2) where primary and secondary filters are mounted (used) within the area where radial skew is large (±0.4 or more). Thus, it is understood that margin of drive performance in the radial skew of the optical disc has been improved in the second embodiment.

It is to be noted that the present invention has been described in accordance with preferred embodiments illustrated in the accompanying drawings and described in detail, it should be understood by those ordinarily skilled in the art that the invention is not limited to embodiments, but various modifications, alternative constructions or equivalents can be implemented without departing from the scope and spirit of the present invention as set forth by appended claims.

Industrial Applicability

As described above, the signal processing apparatus according to the present invention serves to equalize linear signal of filter output of analog filter means by the first adaptive equalizing filter means to correct, by the second adaptive equalizing filter means connected in parallel with the first adaptive equalizing filter, non-linear distortion that filter output of the analog filter means has. Accordingly, it is possible to remove reproduction signal having non-linearity.

The signal processing method according to the present invention comprises: equalizing linear signal of filter output of analog filter step at first adaptive equalizing filter step; and correcting, in parallel to the first adaptive equalizing filter step, non-linear distortion that filter output of analog filter step has at second adaptive equalizing filter step. Thus, it is possible to remove reproduction signal having non-linearity.

**Claims**

1. A signal processing apparatus comprising:

   analog filter means for performing band limitation of a reproduction signal having non-linear distortion, and for performing analog equalization thereof;
   first adaptive equalizing filter means for equalizing a linear signal of a filter output of the analog filter mans; and
   second adaptive equalizing filter means connected in parallel with the first adaptive equalizing means in order to correct non-linear distortion that the filter output of the analog filter means has.

2. The signal processing apparatus as set forth in claim 1, further comprising:

   phase interpolation means for performing interpolation of phase on the basis of a filter output of the first adaptive equalizing filter means and a filter output of the second adaptive equalizing filter means; and
   phase locked loop means for synchronizing phase of the phase interpolation mans on the basis of an interpolated output fed back from the phase compensation means.

3. The signal processing apparatus as set forth in claim 2,
   wherein the second adaptive filter is Volterra filter.

4. The signal processing apparatus as set forth in claim 2, further comprising,
   Viterbi detecting means for detecting error rate of the interpolated output fed back from the phase interpolation means to generate a feedback signal to be delivered to the first adaptive equalizing filter and the second adaptive equalizing filter.

**5.** A signal processing method comprising:

an analog filter step for performing band limitation of a reproduction signal having non-linear distortion, and for performing analog equalization thereof;
a first adaptive equalizing filter step for equalizing a linear signal of a filter output of the analog filter step; and
a second adaptive equalizing filter step executed in parallel to the first adaptive equalizing filter step in order to correct non-linear distortion that the filter output of the analog filter step has.

**6.** The signal processing method as set forth in claim 5, comprising:

a phase interpolation step for performing interpolation of phase on the basis of a filter output of the first adaptive equalizing filter step and a filter output of the second adaptive equalizing filter means; and
a phase locked loop step for synchronizing phase of the phase interpolation step on the basis of an interpolated output fed back from the phase interpolation step.

**7.** The signal processing method as set forth in claim 6,
wherein the second adaptive equalizing filter is Volterra filter.

**8.** The signal processing method as set forth in claim 6, further comprising:

Viterbi detection step for detecting error rate of an interpolated output obtained at the phase interpolation step to deliver a feedback signal at the first adaptive equalizing filter step and the second adaptive equalizing filter step.

EP 1 511 033 A1

FIG.1

**FIG.2**

FIG.3

MR HEAD NON-LINEAR RESPONSE
APPROXIMATION FORMULA

FIG.4

EP 1 511 033 A1

FIG.5

| | Δx = 0.0 | Δx = 0.2 | Δx = 0.4 | Δx = 0.6 | Δx = 0.8 | Δx = 0.10 |
|---|---|---|---|---|---|---|
| R | 0 | 0.083708 | 0.153591 | 0.202075 | 0.229168 | 0.239529 |

# FIG.6

EP 1 511 033 A1

EP 1 511 033 A1

FIG.7

FIG.8

FIG.9

ADAPTIVELY EQUALIZED SDNR VS. INPUT SNR

FIG.10

EP 1 511 033 A1

PHASE ERROR VARIANCE VS.INPUT SNR

FIG.11

Error rate VS. INPUT SNR

FIG.12

EP 1 511 033 A1

FIG.13

FIG.14

**INTERNATIONAL SEARCH REPORT**

| International application No. |
| --- |
| PCT/JP2004/007451 |

**A. CLASSIFICATION OF SUBJECT MATTER**
Int.Cl$^7$ G11B20/14, G11B20/10, G11B20/18

According to International Patent Classification (IPC) or to both national classification and IPC

**B. FIELDS SEARCHED**

Minimum documentation searched (classification system followed by classification symbols)
Int.Cl$^7$ G11B20/14, G11B20/10, G11B20/18

Documentation searched other than minimum documentation to the extent that such documents are included in the fields searched
Jitsuyo Shinan Koho          1922-1996   Toroku Jitsuyo Shinan Koho   1994-2004
Kokai Jitsuyo Shinan Koho    1971-2004   Jitsuyo Shinan Toroku Koho   1996-2004

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2001-195830 A (Matsushita Electric Industrial Co., Ltd.), 19 July, 2001 (19.07.01), Par. Nos. [0047] to [0060]; Fig. 1 & US 2002/159350 A1 | 1-8 |
| Y | Tomokazu ISHIKAWA, "Digital Volterra Filter o Mochiita Onkyo Saiseikei no Hisenkei Hizumi Jokyo ni Kansuru Kento", The Transactions of the Institute of Electronics, Information and Communication Engineers A, Vol.J79-A, No.7, 1996, page 1240 | 1-8 |
| Y | JP 2001-344903 A (Hitachi, Ltd.), 14 December, 2001 (14.12.01), Par. Nos. [0025] to [0029]; Fig. 13 (Family: none) | 4,8 |

| ☐ | Further documents are listed in the continuation of Box C. | ☐ | See patent family annex. |
| --- | --- | --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 24 August, 2004 (24.08.04) | 14 September, 2004 (14.09.04) |

| Name and mailing address of the ISA/ Japanese Patent Office | Authorized officer |
| --- | --- |
| Facsimile No. | Telephone No. |

Form PCT/ISA/210 (second sheet) (January 2004)